# EUROPEAN PATENT APPLICATION

(11) **EP 4 776 486 A1**
(43) Date of publication of application: **15.07.2026**
(21) Application number: 24864382.7
(22) Date of filing: 15.08.2024
(51) Int. Cl.: H02K 3/51

(54) **ROTATING SHAFT OF EXCITATION MOTOR, ROTOR OF EXCITATION MOTOR, EXCITATION MOTOR, AND VEHICLE**

(30) Priority: 11.09.2023 CN 202311174433
(71) Applicant: BYD Company Limited, Shenzhen, Guangdong 518118 (CN)
(72) Inventor: WEN, Yan, Shenzhen, Guangdong 518118 (CN); WU, Shixun, Shenzhen, Guangdong 518118 (CN)
(74) Representative: Taor, Simon Edward William
(86) International application number: PCT/CN2024/112382
(87) International publication number: WO 2025/055659

(57) **Abstract**

A vehicle includes an excitation motor, the excitation motor includes a rotor of the excitation motor, and the rotor of the excitation motor includes a rotating shaft of the excitation motor. An interior of the rotating shaft is configured with a wiring channel, the wiring channel has a first threading port and a second threading port, the first threading port and the second threading port separately run through an outer surface of the rotating shaft, and the wiring channel is configured to accommodate a wire connecting an excitation unit and a rotor excitation winding.

## Description

### CROSS-REFERENCE TO RELATED APPLICATIONS

This application claims priority to Chinese Patent Application No. 202311174433.4, filed with the China National Intellectual Property Administration on September 11, 2023 and entitled "ROTATING SHAFT OF EXCITATION MOTOR, ROTOR OF EXCITATION MOTOR, EXCITATION MOTOR, AND VEHICLE", which is incorporated herein by reference in its entirety.

### TECHNICAL FIELD

This application relates to the field of excitation motor technologies, and in particular, to a rotating shaft of an excitation motor, a rotor of an excitation motor, an excitation motor, and a vehicle.

### BACKGROUND

An excitation motor in related technologies generally includes an excitation unit and a rotor excitation winding, and the excitation unit supplies power to the rotor excitation winding by using an electric field and a magnetic field as media, so as to implement energy transmission. The excitation motor has characteristics of compact structure and flexible configuration. However, a wire between the excitation unit and the rotor excitation winding is generally directly exposed to the air. The wire is tied to a rotating shaft by using a binding thread. In a complex environment of external vibration, acceleration superposition, and strong centrifugal force of the rotor, the wire is prone to aging and failure, and faults such as wire detachment and wire breakage are easily caused, which causes the excitation motor to fail to work normally.

### SUMMARY

This application is intended to resolve at least one of technical problems in the conventional technology. Therefore, an objective of this application is to provide a rotating shaft of an excitation motor that can prevent a wire connected between an excitation unit and a rotor excitation winding from being exposed outside the rotating shaft, thereby reducing a probability of problems such as aging of an insulating layer and short circuit occurring in the wire.

This application further provides a rotor of an excitation motor having the foregoing rotating shaft of the excitation motor.

This application further provides an excitation motor having the foregoing rotor of the excitation motor.

This application further provides a vehicle having the foregoing excitation motor.

To achieve the foregoing objective, according to an embodiment of a first aspect of this application, a rotating shaft of an excitation motor is provided. An interior of the rotating shaft is configured with a wiring channel, the wiring channel has a first threading port and a second threading port, the first threading port and the second threading port separately run through an outer surface of the rotating shaft, and the wiring channel is configured to accommodate a wire connecting an excitation unit and a rotor excitation winding.

The rotating shaft of the excitation motor according to the embodiment of the first aspect of this application can prevent the wire connected between the excitation unit and the rotor excitation winding from being exposed outside the rotating shaft, thereby reducing a probability of problems such as aging of an insulating layer and short circuit occurring in the wire.

According to some embodiments of this application, both the first threading port and the second threading port run through an outer peripheral surface of the rotating shaft.

According to some embodiments of this application, the first threading port and the second threading port are disposed at intervals along an axial direction of the rotating shaft.

According to some embodiments of this application, the wiring channel includes: an axial segment, where the axial segment extends along the axial direction of the rotating shaft; a first radial segment, where the first radial segment extends along a radial direction of the rotating shaft, one end of the first radial segment is in communication with one end of the axial segment, and the other end of the first radial segment forms the first threading port; and a second radial segment, where the second radial segment extends along the radial direction of the rotating shaft, one end of the second radial segment is in communication with the other end of the axial segment, and the other end of the second radial segment forms the second threading port.

According to some embodiments of this application, the first radial segment and the second radial segment extend along the radial direction of the rotating shaft toward a same side of the axial segment.

According to some embodiments of this application, a length of the first radial segment is equal to a length of the second radial segment.

According to some embodiments of this application, the rotating shaft is configured with a process hole, the process hole extends along the axial direction of the rotating shaft and runs through at least one end of the rotating shaft, and the axial segment is constituted by a portion of the process hole.

According to some embodiments of this application, a portion of the process hole other than the portion constituting the axial segment is filled with a sealing member.

According to some embodiments of this application, the sealing member is an insulating member.

According to some embodiments of this application, a central axis of the process hole coincides with a central axis of the rotating shaft.

According to some embodiments of this application, a plurality of wiring channels are configured and arranged at intervals along a circumferential direction of the rotating shaft.

According to some embodiments of this application, two wiring channels are configured and disposed opposite to each other along the radial direction of the rotating shaft.

According to an embodiment of a second aspect of this application, a rotor of an excitation motor is provided, including: the rotating shaft of the excitation motor according to the embodiment of the first aspect of this application; an excitation unit; a rotor core, the rotating shaft being connected to the rotor core, and the rotor core being provided with a rotor excitation winding; and a wire, the wire passing through the wiring channel through the first threading port and the second threading port, and the wire being separately connected to the excitation unit and the excitation winding.

By using the rotating shaft of the excitation motor according to the embodiment of the first aspect of this application, the rotor of the excitation motor according to the embodiment of the second aspect of this application can prevent the wire connected between the excitation unit and the rotor excitation winding from being exposed outside the rotating shaft, thereby reducing a probability of problems such as aging of an insulating layer and short circuit occurring in the wire.

According to some embodiments of this application, the excitation unit includes: an excitation stator; and an excitation rotor, where the excitation rotor is sleeved on the rotating shaft and rotates synchronously with the rotating shaft, and the excitation rotor is connected to the wire.

According to some embodiments of this application, the rotor core covers the first threading port, and one end of the wire is connected to the rotor excitation winding through the first threading port; and the excitation unit covers the second threading port, and the other end of the wire is connected to the excitation unit through the second threading port.

According to some embodiments of this application, the rotor of the excitation motor further includes: a first plug, the first plug blocking the first threading port, and the first plug being provided with a first positioning hole through which the wire passes; and a second plug, the second plug blocking the second threading port, and the second plug being provided with a second positioning hole through which the wire passes.

According to some embodiments of this application, each of the first plug and the second plug includes: an insertion segment; and a positioning segment, where the positioning segment is connected to one end of the insertion segment, a cross-sectional area of the positioning segment is greater than a cross-sectional area of the insertion segment, the first threading port and the second threading port are each provided with a sinking groove, and the positioning segment stops against a bottom wall of the sinking groove.

According to some embodiments of this application, the other end of the insertion segment is provided with a guide portion, and a cross-sectional area of the guide portion gradually decreases along a direction away from the positioning segment.

According to some embodiments of this application, an outer peripheral surface of the insertion segment is provided with a deformation groove extending along a circumferential direction of the insertion segment, and the deformation groove is adjacent to the guide portion and is disposed on a side of the guide portion facing the positioning segment.

According to some embodiments of this application, the rotor of the excitation motor further includes: a first jointing clamp, the first jointing clamp separately clamping the rotor excitation winding and the wire, so that the rotor excitation winding and the wire are connected through the first jointing clamp; and a second jointing clamp, the second jointing clamp separately clamping the excitation unit and the wire, so that the excitation unit and the wire are connected through the second jointing clamp.

According to some embodiments of this application, each of the first jointing clamp and the second jointing clamp includes: a substrate; and a first clamping jaw and a second clamping jaw, where the first clamping jaw and the second clamping jaw are respectively disposed on two opposite sides of the substrate, the first clamping jaw is configured to clamp the rotor excitation winding or the excitation unit, and the second clamping jaw is configured to clamp the wire.

According to some embodiments of this application, each of the first clamping jaw and the second clamping jaw includes: a first elastic arm and a second elastic arm, where a clamping hole and an inlet/outlet notch that are in communication with each other are defined between the first elastic arm and the second elastic arm, and a width of the inlet/outlet notch is less than an aperture of the clamping hole.

According to some embodiments of this application, a central axis of the clamping hole of the first clamping jaw is perpendicular to a central axis of the clamping hole of the second clamping jaw.

According to an embodiment of a third aspect of this application, an excitation motor is provided, including the rotor of the excitation motor according to the embodiment of the second aspect of this application.

By using the rotor of the excitation motor according to the embodiment of the second aspect of this application, the excitation motor according to the embodiment of the third aspect of this application can prevent the wire connected between the excitation unit and the rotor excitation winding from being exposed outside the rotating shaft, thereby reducing a probability of problems such as aging of an insulating layer and short circuit occurring in the wire.

According to an embodiment of a fourth aspect of this application, a vehicle is provided, including the excitation motor according to the embodiment of the third aspect of this application.

By using the excitation motor according to the embodiment of the third aspect of this application, the excitation motor according to the embodiment of the fourth aspect of this application can prevent the wire connected between the excitation unit and the rotor excitation winding from being exposed outside the rotating shaft, thereby reducing a probability of problems such as aging of an insulating layer and short circuit occurring in the wire.

A part of additional aspects and advantages of this application will be given in the following description, and a part will become apparent from the following description, or will be learned through practice of this application.

### BRIEF DESCRIPTION OF DRAWINGS

The foregoing and/or additional aspects and advantages of this application will be clear and easily understood from the description of the embodiments taken in conjunction with the following drawings.
FIG. 1 is a schematic diagram of a structure of a rotor according to an embodiment of this application;
FIG. 2 is a schematic diagram of a structure of a rotor from another perspective according to an embodiment of this application;
FIG. 3 is a sectional view of a rotor according to an embodiment of this application;
FIG. 4 is a partially enlarged schematic diagram of a region A in FIG. 3;
FIG. 5 is a schematic diagram of connection between a first jointing clamp of a rotor and a rotor excitation winding on a rotor core according to an embodiment of this application;
FIG. 6 is a schematic diagram of connection between a first jointing clamp of a rotor and a rotor excitation winding on a rotor core from another perspective according to an embodiment of this application;
FIG. 7 is a schematic diagram of a structure of a first jointing clamp (a second jointing clamp) of a rotor according to an embodiment of this application;
FIG. 8 is a schematic diagram of a structure of a first plug (a second plug) of a rotor according to an embodiment of this application;
FIG. 9 is a schematic diagram of a structure of a first plug (a second plug) of a rotor from another perspective according to an embodiment of this application;
FIG. 10 is a sectional view of a rotating shaft according to an embodiment of this application;
FIG. 11 is a sectional view of a rotating shaft according to another embodiment of this application; and
FIG. 12 is a schematic block diagram of a vehicle according to an embodiment of this application.

### Reference signs:

Vehicle 2000; Excitation motor 1000;
Rotor 1;
Rotating shaft 10; Sealing member 20; Rotor core 40; Wire 50;
Wiring channel 100; First threading port 101; Second threading port 102; Axial segment 110; First radial segment 120; Second radial segment 130; Process hole 140; Sinking groove 150;
Excitation unit 200; Excitation stator 210; Excitation rotor 220; Installation air gap 230;
First plug 310; First positioning hole 311; Second plug 320; Second positioning hole 321; Insertion segment 330; Positioning segment 340; Guide portion 350; Deformation groove 360;
Rotor excitation winding 401; First jointing clamp 410; Second jointing clamp 420; Substrate 430; First clamping jaw 440; Second clamping jaw 450; First elastic arm 460; Second elastic arm 470; Clamping hole 480; Inlet/outlet notch 490;
Bearing 500; and End cover 600.

### DESCRIPTION OF EMBODIMENTS

Embodiments of this application are described in detail below. The embodiments described with reference to the accompanying drawings are examples.

In the description of this application, it should be understood that the orientation or positional relationship indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like, is an orientation or positional relationship shown based on the accompanying drawings, and is only for ease of describing this application and simplifying the descriptions, rather than indicating or implying that the apparatus or element referred to must have a specific orientation or be constructed and operated in a specific orientation, and therefore should not be understood as a limitation on this application.

In the description of this application, "a plurality of" means two or more.

The following describes a rotating shaft 10 of an excitation motor according to an embodiment of this application with reference to the accompanying drawings.

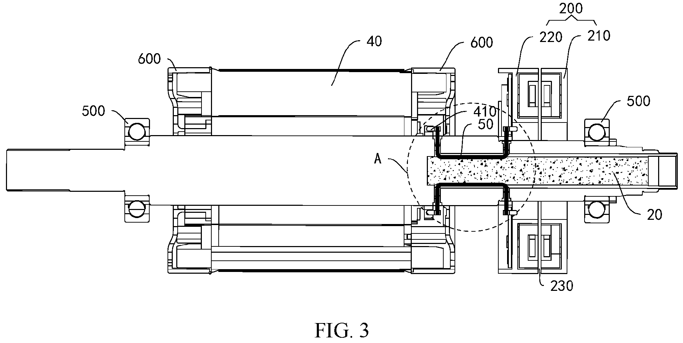

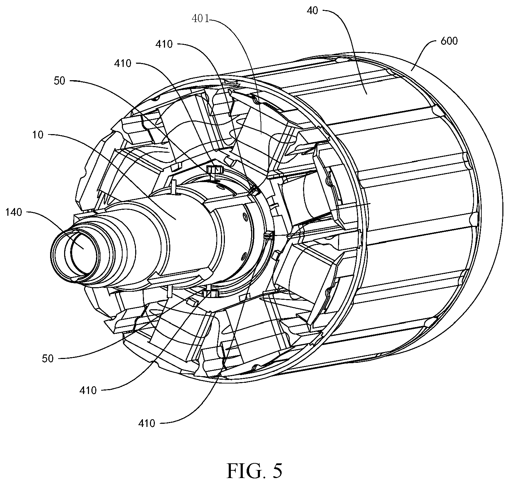

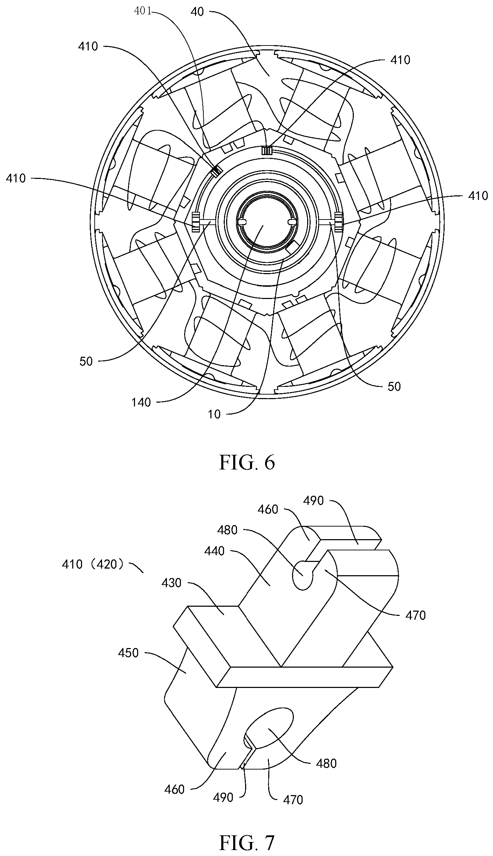

As shown in FIG. 3, FIG. 4, FIG. 5, FIG. 6, FIG. 10, and FIG. 11, an interior of the rotating shaft 10 of the excitation motor according to the embodiment of this application is configured with a wiring channel 100, the wiring channel 100 has a first threading port 101 and a second threading port 102, the first threading port 101 and the second threading port 102 separately run through an outer surface of the rotating shaft 10, and the wiring channel 100 is configured to accommodate a wire 50 connecting an excitation unit 200 and a rotor excitation winding 401.

According to the rotating shaft 10 of the excitation motor in the embodiment of this application, a wire 50 is arranged in the wiring channel 100 inside the rotating shaft 10, one end of the wire 50 passes through the first threading port 101 and extends out of the rotating shaft 10, the other end of the wire 50 passes through the second threading port 102 and extends out of the rotating shaft 10, and two ends of the wire 50 are respectively connected to the excitation unit 200 and the rotor excitation winding 401, which can ensure that a direct current output by the excitation unit 200 is reliably output to the rotor excitation winding 401 through the wire 50.

In the foregoing wiring manner, the wire 50 is prevented from being exposed outside the rotating shaft 10. When the excitation motor runs for a long time, the wire 50 is not easily affected by a strong centrifugal force and high temperature of a rotor 1, thereby avoiding problems such as aging of an insulating layer and short circuit. In addition, the foregoing wiring manner has a simple structure and is easy to implement.

In this way, the rotating shaft 10 of the excitation motor according to the embodiment of this application can prevent the wire 50 connected between the excitation unit 200 and the rotor excitation winding 401 from being exposed outside the rotating shaft 10, thereby reducing a probability of problems such as aging of an insulating layer and short circuit occurring in the wire 50.

According to some specific embodiments of this application, as shown in FIG. 3, FIG. 4, FIG. 5, FIG. 6, FIG. 10, and FIG. 11, both the first threading port 101 and the second threading port 102 run through an outer peripheral surface of the rotating shaft 10. The rotor excitation winding 401 and the excitation unit 200 are generally sleeved on the rotating shaft 10, that is, the rotor excitation winding 401 surrounds the outer peripheral surface of the rotating shaft 10, and the excitation unit 200 surrounds the outer peripheral surface of the rotating shaft 10. The first threading port 101 and the second threading port 102 run through the outer peripheral surface of the rotating shaft 10, so that the wire 50 extends out of the first threading port 101 and the second threading port 102 to be connected to the rotor excitation winding 401 and the excitation unit 200.

According to some specific embodiments of this application, as shown in FIG. 3, FIG. 4, FIG. 5, FIG. 6, FIG. 10, and FIG. 11, the first threading port 101 and the second threading port 102 are disposed at intervals along an axial direction of the rotating shaft 10. The rotor excitation winding 401 and the excitation unit 200 are also disposed at intervals along the axial direction of the rotating shaft 10. In this way, when two ends of the wire 50 extend out of the first threading port 101 and the second threading port 102, the two ends of the wire 50 can be more easily connected to the rotor excitation winding 401 and the excitation unit 200.

For example, the first threading port 101 is closer to the rotor excitation winding 401 than the second threading port 102, and the second threading port 102 is closer to the excitation unit 200 than the first threading port 101. The end of the wire 50 extending out of the first threading port 101 may be connected to the rotor excitation winding 401, and the end of the wire 50 extending out of the second threading port 102 may be connected to the excitation unit 200.

It should be noted that positions of the first threading port 101 and the second threading port 102 may be interchangeable, that is, the first threading port 101 is closer to the excitation unit 200 than the second threading port 102, and the second threading port 102 is closer to the rotor excitation winding 401 than the first threading port 101. The end of the wire 50 extending out of the first threading port 101 may be connected to the excitation unit 200, and the end of the wire 50 extending out of the second threading port 102 may be connected to the rotor excitation winding 401.

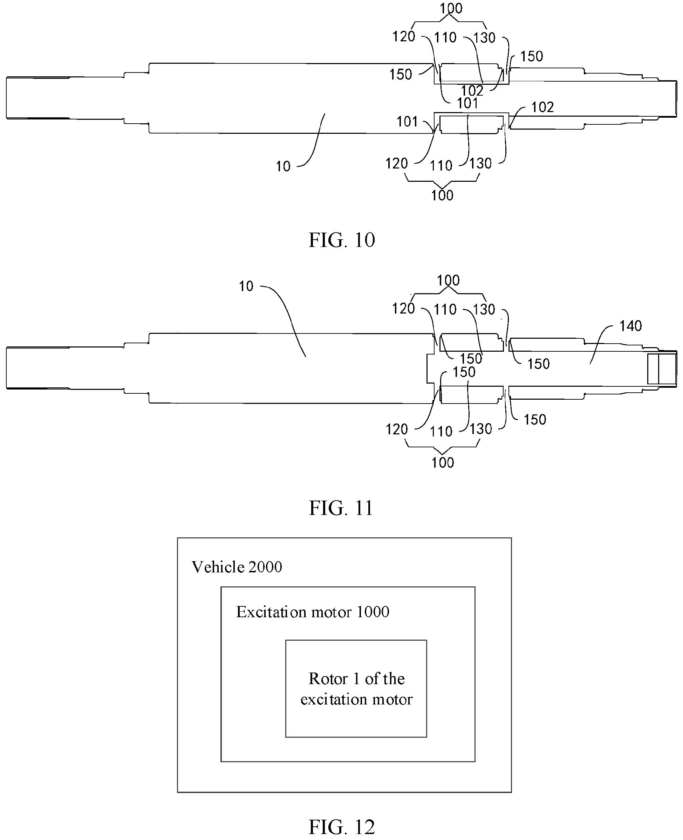

According to some specific embodiments of this application, as shown in FIG. 10 and FIG. 11, the wiring channel 100 includes an axial segment 110, a first radial segment 120, and a second radial segment 130.

The axial segment 110 extends along the axial direction of the rotating shaft 10. The first radial segment 120 extends along a radial direction of the rotating shaft 10, one end of the first radial segment 120 is in communication with one end of the axial segment 110, and the other end of the first radial segment 120 forms the first threading port 101. The second radial segment 130 extends along the radial direction of the rotating shaft 10, one end of the second radial segment 130 is in communication with the other end of the axial segment 110, and the other end of the second radial segment 130 forms the second threading port 102.

For example, at a connection between the axial segment 110 and the first radial segment 120 and at a connection between the axial segment 110 and the second radial segment 130, a bending radius of the wire 50 may be 90°, which facilitates installation of the wire 50 into the rotating shaft 10.

By configuring the wiring channel 100 to be divided into the axial segment 110, the first radial segment 120, and the second radial segment 130, it is convenient to arrange the first threading port 101 and the second threading port 102 at intervals along the axial direction of the rotating shaft 10, and it is also convenient to arrange the wire 50.

According to some specific embodiments of this application, as shown in FIG. 10 and FIG. 11, the first radial segment 120 and the second radial segment 130 extend along the radial direction of the rotating shaft 10 toward a same side of the axial segment 110. In this way, a length of the wire 50 can be shortened, and the first radial segment 120 and the second radial segment 130 may be machined from a same side of the rotating shaft 10, and machining is relatively convenient.

According to some specific embodiments of this application, as shown in FIG. 10 and FIG. 11, a length of the first radial segment 120 is equal to a length of the second radial segment 130. In this way, a central axis of the axial segment 110 is parallel to a central axis of the rotating shaft 10, which can shorten a length of the axial segment 110 and reduce machining difficulty. In addition, a central axis of the first radial segment 120 is parallel to a central axis of the second radial segment 130. Therefore, machining standards of the first radial segment 120 and the second radial segment 130 are substantially the same, which can reduce machining difficulty and improve production efficiency.

According to some specific embodiments of this application, as shown in FIG. 3, FIG. 4, and FIG. 11, the rotating shaft 10 is configured with a process hole 140, the process hole 140 extends along the axial direction of the rotating shaft 10 and runs through at least one end of the rotating shaft 10, and the axial segment 110 is constituted by a portion of the process hole 140. Because the process hole 140 only needs to extend inward from an end surface of the rotating shaft 10 along the axial direction of the rotating shaft 10, machining difficulty of the process hole 140 is relatively low, which can reduce difficulty of machining the axial segment 110, simplify a structure of the rotating shaft 10, and improve production efficiency.

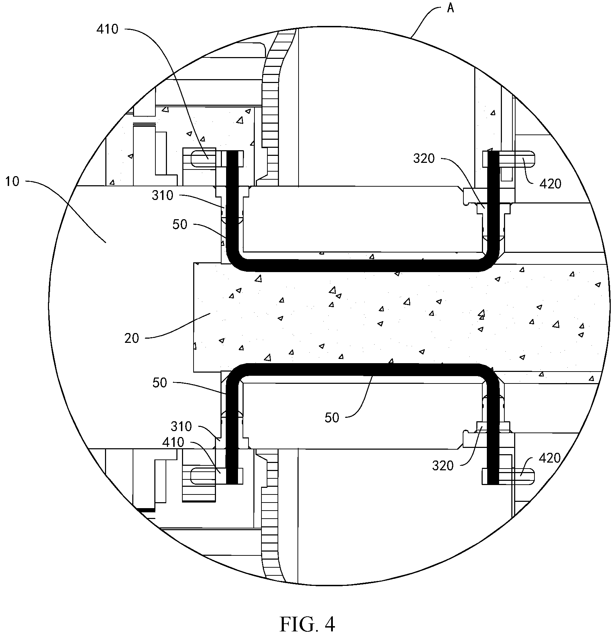

According to some specific embodiments of this application, as shown in FIG. 3 and FIG. 4, a portion of the process hole 140 other than the portion constituting the axial segment 110 is filled with a sealing member 20. The sealing member 20 may be made of epoxy resin, and the sealing member 20 may fill the process hole 140 in a potting manner. The wire 50 is first installed in the wiring channel 100, and then the sealing member 20 fills the process hole 140.

In this way, the wire 50 can be prevented from being exposed to the air through the process hole 140, and a probability of aging of an insulating layer of the wire 50 due to the strong centrifugal force and high temperature of the rotor 1 when the excitation motor runs for a long time is reduced, and structural strength of the rotating shaft 10 is higher.

According to some specific embodiments of this application, the sealing member 20 is an insulating member. In this way, even if the insulating layer of the wire 50 due to the strong centrifugal force and high temperature of the rotor 1 when the excitation motor runs for a long time is aged, the sealing member 20 can still provide insulation protection for the wire 50, thereby improving insulation performance between the wire 50 and the sealing member 20, effectively reducing a risk of short circuit of the wire 50, and making electrical performance of the excitation motor safer and more reliable.

According to some specific embodiments of this application, as shown in FIG. 3, FIG. 4, and FIG. 11, a central axis of the process hole 140 coincides with a central axis of the rotating shaft 10. In this way, an overall weight of the rotating shaft 10 is more uniform, which avoids a phenomenon of eccentricity during rotation of the rotating shaft 10, thereby improving working stability of the excitation motor, and reducing noise generated by shaking of the excitation motor.

According to some specific embodiments of this application, as shown in FIG. 3, FIG. 4, FIG. 10, and FIG. 11, a plurality of wiring channels 100 are configured and arranged at intervals along a circumferential direction of the rotating shaft 10. By providing the plurality of wiring channels 100, a plurality of wires 50 can be provided between the excitation unit 200 and the rotor excitation winding 401, so that electrical connection performance between the excitation unit 200 and the rotor excitation winding 401 is more reliable.

According to some specific embodiments of this application, as shown in FIG. 3, FIG. 4, FIG. 5, FIG. 6, FIG. 10, and FIG. 11, two wiring channels 100 are configured and disposed opposite to each other along the radial direction of the rotating shaft 10. The wire 50 in one wiring channel 100 may be connected to a positive electrode of the excitation unit 200 and a positive electrode of the rotor excitation winding 401, and the wire 50 in the other wiring channel 100 may be connected to a negative electrode of the excitation unit 200 and a negative electrode of the rotor excitation winding 401. In this way, a complete conductive loop may be formed between the excitation unit 200 and the rotor excitation winding 401. In addition, the two wires 50 are respectively disposed on two opposite sides of the rotating shaft 10 along the radial direction, which can reduce the risk of short circuit and improve safety.

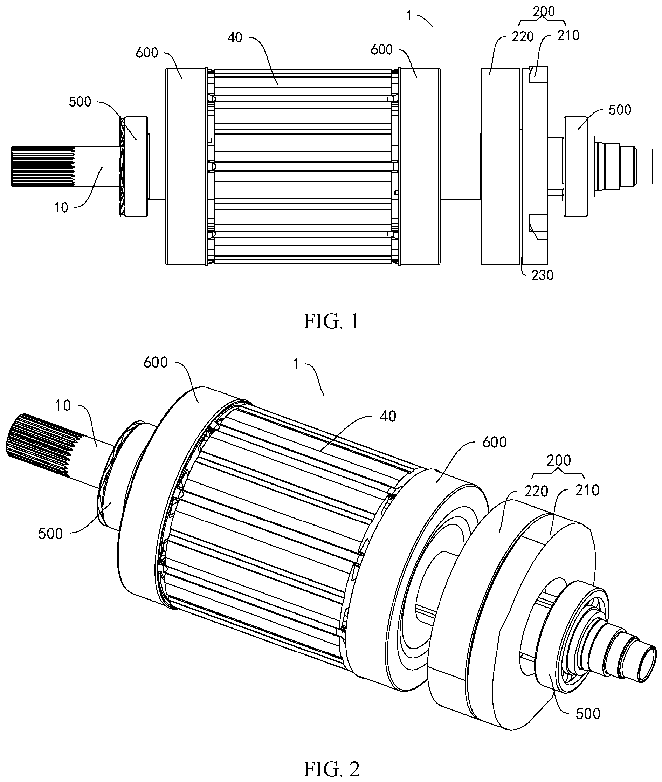

According to the rotor 1 of the excitation motor in the embodiment of this application, as shown in FIG. 1 to FIG. 11, the rotor 1 of the excitation motor includes the rotating shaft 10 of the excitation motor according to any of the foregoing embodiments of this application, the excitation unit 200, the rotor core 40, and the wire 50.

The rotating shaft 10 is connected to the rotor core 40, and the rotor core 40 is provided with the rotor excitation winding 401. The wire 50 passes through the wiring channel 100 through the first threading port 101 and the second threading port 102, and the wire 50 is separately connected to the excitation unit 200 and the excitation winding.

For example, a rotor winding groove is provided on the rotor core 40, the rotor excitation winding 401 is wound around the rotor winding groove, rotor excitation windings 401 of adjacent poles are wound along opposite directions, and a rotor magnetic field with alternating N and S poles is generated when a direct current excitation current is applied to the rotor excitation winding 401.

In addition, after the rotor excitation winding 401 is wound on the rotor core 40, an end cover 600 is provided on each of two opposite sides of the rotor excitation winding 401 on the rotating shaft 10. The end cover 600 may be made of an aluminum material or a stainless steel material, the end cover 600 has a function of shielding magnetic and protecting an end portion of the rotor excitation winding 401, and the excitation unit 200 is spaced apart from the end cover 600 along the axial direction of the rotating shaft 10.

A bearing 500 is sleeved on the rotating shaft 10, and the excitation unit 200 and the rotor core 40 are disposed between two bearings 500 along the axial direction of the rotating shaft 10.

By using the rotating shaft 10 of the excitation motor according to the foregoing embodiment of this application, the rotor 1 of the excitation motor according to the embodiment of this application can prevent the wire 50 connected between the excitation unit 200 and the rotor excitation winding 401 from being exposed outside the rotating shaft 10, thereby reducing a probability of problems such as aging of an insulating layer and short circuit occurring in the wire 50.

According to some specific embodiments of this application, as shown in FIG. 3, the excitation unit 200 includes an excitation stator 210 and an excitation rotor 220. The excitation rotor 220 is sleeved on the rotating shaft 10 and rotates synchronously with the rotating shaft 10, and the excitation rotor 220 is connected to the wire 50.

For example, the excitation unit 200 is a rotary transformer, the excitation stator 210 may be fixedly connected to a motor housing of the excitation motor, the excitation stator 210 is in communication with an external power supply, the excitation stator 210 is a primary side of the rotary transformer, the excitation rotor 220 is a secondary side of the rotary transformer, and there is an installation air gap 230 between the excitation stator 210 and the excitation rotor 220 along the axial direction of the rotating shaft 10. The excitation unit 200 relies on the excitation stator 210 and the excitation rotor 220 to implement energy transmission through the electric field and the magnetic field as media, and supplies power to the rotor excitation winding 401.

According to some specific embodiments of this application, as shown in FIG. 3, FIG. 4, FIG. 5, FIG. 6, FIG. 10, and FIG. 11, the rotor core 40 covers the first threading port 101, and one end of the wire 50 is connected to the rotor excitation winding 401 through the first threading port 101. The excitation unit 200 covers the second threading port 102, and the other end of the wire 50 is connected to the excitation unit 200 through the second threading port 102.

Specifically, the end cover 600 covers the first threading port 101, and the sealing member 20 connects the end cover 600 and the rotating shaft 10 into a whole, which facilitates heat dissipation at the end portion of the rotor excitation winding 401 and improves structural strength of the rotor 1. In addition, the sealing member 20 connects the excitation rotor 220 of the excitation unit 200 and the rotating shaft 10 into a whole, which facilitates heat dissipation at an end portion of the excitation rotor 220 and improves structural strength of the rotor 1.

In addition, a distance between the wire 50 and the rotor excitation winding 401 is short, and a distance between the wire 50 and the excitation unit 200 is short, which advantageously reduces a volume of the wire 50 exposed to the air, and reduces a probability of problems such as aging of an insulating layer and short circuit of the wire 50 due to the strong centrifugal force and high temperature of the rotor 1.

According to some specific embodiments of this application, as shown in FIG. 3, FIG. 4, FIG. 8, and FIG. 9, the rotor 1 of the excitation motor further includes a first plug 310 and a second plug 320. The first plug 310 blocks the first threading port 101, and the first plug 310 is provided with a first positioning hole 311 through which the wire 50 passes. The second plug 320 blocks the second threading port 102, and the second plug 320 is provided with a second positioning hole 321 through which the wire 50 passes.

For example, the first plug 310 and the second plug 320 may be made of an insulating material. The first plug 310 can fix a relative position between the wire 50 and an inner wall of the first threading port 101, so as to prevent the wire 50 from shaking in the first threading port 101, and the first plug 310 separates the wire 50 from the inner wall of the first threading port 101, thereby increasing insulation performance between the wire 50 and the rotating shaft 10. The second plug 320 can fix a relative position between the wire 50 and an inner wall of the second threading port 102, so as to prevent the wire 50 from shaking in the second threading port 102, and the second plug 320 separates the wire 50 from the inner wall of the second threading port 102, thereby increasing insulation performance between the wire 50 and the rotating shaft 10.

In addition, the first threading port 101 and the second threading port 102 can be blocked by using the first plug 310 and the second plug 320, thereby preventing the sealing member 20 from flowing out of the rotating shaft 10 from the first threading port 101 and the second threading port 102.

According to some specific embodiments of this application, as shown in FIG. 4 and FIG. 8 to FIG. 11, each of the first plug 310 and the second plug 320 includes an insertion segment 330 and a positioning segment 340. The positioning segment 340 is connected to one end of the insertion segment 330, a cross-sectional area of the positioning segment 340 is greater than a cross-sectional area of the insertion segment 330, the first threading port 101 and the second threading port 102 are each provided with a sinking groove 150, and the positioning segment 340 stops against a bottom wall of the sinking groove 150.

The insertion segment 330 of the first plug 310 can be sealingly matched with the inner wall of the first threading port 101, and the insertion segment 330 of the second plug 320 can be sealingly matched with the inner wall of the second threading port 102, so as to implement sealing for the first threading port 101 and the second threading port 102.

The positioning segment 340 of the first plug 310 is matched with the sinking groove 150 of the first threading port 101, which can determine a relative position between the first plug 310 and the first threading port 101, thereby preventing the first plug 310 from being excessively inserted into the first threading port 101. The positioning segment 340 of the second plug 320 is matched with the sinking groove 150 of the second threading port 102, which can determine a relative position between the second plug 320 and the second threading port 102, thereby preventing the second plug 320 from being excessively inserted into the second threading port 102.

For example, a surface of the positioning segment 340 facing away from the insertion segment 330 may be disposed on a same plane as the outer peripheral surface of the rotating shaft 10. In this way, the positioning segment 340 does not protrude beyond the rotating shaft 10 and does not interfere with the excitation unit 200 or the rotor core 40, and the positioning segment 340 is not recessed relative to the rotating shaft 10 and dust is not easily accumulated in the positioning segment 340, thereby improving cleanliness.

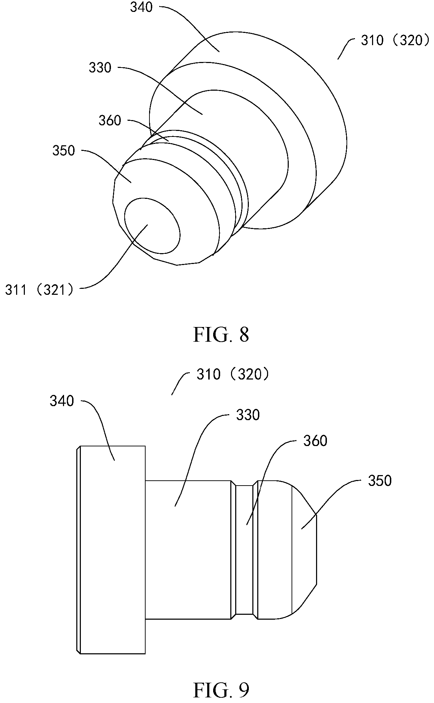

According to some specific embodiments of this application, as shown in FIG. 8 and FIG. 9, the other end of the insertion segment 330 is provided with a guide portion 350, and a cross-sectional area of the guide portion 350 gradually decreases along a direction away from the positioning segment 340. In this way, the guide portion 350 can play a guiding role, so that the insertion segment 330 of the first plug 310 is inserted into the first threading port 101, and the insertion segment 330 of the second plug 320 can be inserted into the second threading port 102, thereby reducing assembly difficulty and improving assembly efficiency.

According to some specific embodiments of this application, as shown in FIG. 8 and FIG. 9, an outer peripheral surface of the insertion segment 330 is provided with a deformation groove 360 extending along a circumferential direction of the insertion segment 330, and the deformation groove 360 is adjacent to the guide portion 350 and is disposed on a side of the guide portion 350 facing the positioning segment 340. In an insertion process of the insertion segment 330, stress of the guide portion 350 can push a groove wall of the deformation groove 360 to deform, so as to further reduce assembling difficulty and improve assembling efficiency.

According to some specific embodiments of this application, as shown in FIG. 4 to FIG. 7, the rotor 1 of the excitation motor further includes a first jointing clamp 410 and a second jointing clamp 420.

The first jointing clamp 410 separately clamps the rotor excitation winding 401 and the wire 50, so that the rotor excitation winding 401 and the wire 50 are connected through the first jointing clamp 410. The second jointing clamp 420 separately clamps the excitation unit 200 and the wire 50, so that the excitation unit 200 and the wire 50 are connected through the second jointing clamp 420.

For example, the first jointing clamp 410 and the second jointing clamp 420 may be made of metal copper, so that the rotor excitation winding 401 and the wire 50 are electrically connected through the first jointing clamp 410, and the excitation unit 200 and the wire 50 are electrically connected through the second jointing clamp 420. Outer surfaces of the first jointing clamp 410 and the second jointing clamp 420 may be tin-plated. In addition, the sealing member 20 can connect the first jointing clamp 410, the second jointing clamp 420, and the rotating shaft 10 into a whole.

The rotor excitation winding 401 and the wire 50 are connected through the first jointing clamp 410. The rotor excitation winding 401 and the wire 50 do not need to be directly connected, making connection convenient and stable, and the rotor excitation winding 401 and the wire 50 are not easily separated from each other during high-speed rotation of the excitation motor. In addition, the rotor excitation winding 401 and the wire 50 are clamped by the first jointing clamp 410, and thus stability of electrical connection is high. The wire 50 may be welded to the first jointing clamp 410 after being clamped by the first jointing clamp 410, thereby further improving stability of connection.

The excitation unit 200 and the wire 50 are connected through the second jointing clamp 420. The excitation unit 200 and the wire 50 do not need to be directly connected, making connection convenient and stable, and the excitation unit 200 and the wire 50 are not easily separated from each other during high-speed rotation of the excitation motor. In addition, the excitation unit 200 and the wire 50 are clamped by the second jointing clamp 420, and thus stability of electrical connection is high. The wire 50 may be welded to the second jointing clamp 420 after being clamped by the second jointing clamp 420, thereby further improving stability of connection.

According to some specific embodiments of this application, as shown in FIG. 4 to FIG. 7, each of the first jointing clamp 410 and the second jointing clamp 420 includes a substrate 430, a first clamping jaw 440, and a second clamping jaw 450.

The first clamping jaw 440 and the second clamping jaw 450 are respectively disposed on two opposite sides of the substrate 430, the first clamping jaw 440 is configured to clamp the rotor excitation winding 401 or the excitation unit 200, and the second clamping jaw 450 is configured to clamp the wire 50.

That is, the first jointing clamp 140 clamps the rotor excitation winding 401 and the wire 50 respectively through the first clamping jaw 440 and the second clamping jaw 450, and the second jointing clamp 420 clamps the excitation unit 200 and the wire 50 respectively through the first clamping jaw 440 and the second clamping jaw 450, and the first clamping jaw 440 and the second clamping jaw 450 are separated by the substrate 430. In this way, the rotor excitation winding 401 or the excitation unit 200 is unlikely to interfere with the wire 50, and clamping is more stable and reliable.

According to some specific embodiments of this application, as shown in FIG. 4 to FIG. 7, each of the first clamping jaw 440 and the second clamping jaw 450 includes a first elastic arm 460 and a second elastic arm 470. A clamping hole 480 and an inlet/outlet notch 490 that are in communication with each other are defined between the first elastic arm 460 and the second elastic arm 470, and a width of the inlet/outlet notch 490 is less than an aperture of the clamping hole 480.

The wire 50 can enter the clamping hole 480 through the inlet/outlet notch 490, and both the aperture of the clamping hole 480 and the width of the inlet/outlet notch 490 can be less than a diameter of the wire 50. In this way, the first elastic arm 460 and the second elastic arm 470 can exert a clamping force on the wire 50, so that connection between the wire 50 and the second clamping jaw 450 is more reliable. In addition, because the width of the inlet/outlet notch 490 is less than the aperture of the clamping hole 480, the wire 50 is less likely to detach from the clamping hole 480.

Similarly, a winding set on the excitation unit 200 can also enter the clamping hole 480 through the inlet/outlet notch 490, and both the aperture of the clamping hole 480 and the width of the inlet/outlet notch 490 can be less than a diameter of the winding set on the excitation unit 200. In this way, the first elastic arm 460 and the second elastic arm 470 can exert a clamping force on the winding set on the excitation unit 200, so that connection between the winding set on the excitation unit 200 and the first clamping jaw 440 of the second jointing clamp 420 are more reliable. In addition, because the width of the inlet/outlet notch 490 is less than the aperture of the clamping hole 480, the winding set on the excitation unit 200 is less likely to detach from the clamping hole 480.

The rotor excitation winding 401 can also enter the clamping hole 480 through the inlet/outlet notch 490, and both the aperture of the clamping hole 480 and the width of the inlet/outlet notch 490 can be less than a diameter of the rotor excitation winding 401. In this way, the first elastic arm 460 and the second elastic arm 470 can exert a clamping force on the rotor excitation winding 401, so that connection between the rotor excitation winding 401 and the first clamping jaw 440 of the first jointing clamp 410 is more reliable. In addition, because the width of the inlet/outlet notch 490 is less than the aperture of the clamping hole 480, the rotor excitation winding 401 is less likely to detach from the clamping hole 480.

According to some specific embodiments of this application, as shown in FIG. 4 to FIG. 7, a central axis of the clamping hole 480 of the first clamping jaw 440 is perpendicular to a central axis of the clamping hole 480 of the second clamping jaw 450. This facilitates connection of the first jointing clamp 410 to the rotor excitation winding 401 and the wire 50, and also facilitates connection of the second jointing clamp 420 to the excitation unit 200 and the wire 50, making connection more convenient and improving assembly efficiency.

The following describes an excitation motor 1000 according to embodiments of this application with reference to the accompanying drawings. The excitation motor 1000 includes the rotor 1 of the excitation motor according to the foregoing embodiment of this application, as shown in FIG. 12.

By using the rotor 1 of the excitation motor according to the foregoing embodiment of this application, the excitation motor 1000 according to the embodiments of this application can prevent the wire 50 of both the excitation unit 200 and the rotor excitation winding 401 from being exposed outside the rotating shaft 10, thereby reducing a probability of problems such as aging of an insulating layer and short circuit occurring in the wire 50.

The following describes a vehicle 2000 according to an embodiment of this application with reference to FIG. 12. The vehicle 2000 includes the excitation motor 1000 according to any of the foregoing embodiments of this application.

By using the excitation motor 1000 according to the foregoing embodiments of this application, the wire 50 of both the excitation unit 200 and the rotor excitation winding 401 can be prevented from being exposed outside the rotating shaft 10, thereby reducing a probability of problems such as aging of an insulating layer and short circuit occurring in the wire 50.

Other components and operations of the rotating shaft 10 of the excitation motor, the rotor 1 of the excitation motor, the excitation motor 1000, and the vehicle 2000 according to the embodiments of this application are known to a person of ordinary skill in the art, and are not described in detail herein.

In the description of this specification, descriptions referring to the terms such as "one embodiment", "some embodiments", "example embodiments", "examples", "specific examples", or "some examples" mean that specific features, structures, materials, or characteristics described with reference to this embodiment or example are included in at least one embodiment or example of this application. In this specification, illustrative expressions of the foregoing terms do not necessarily refer to a same embodiment or example.

Although embodiments of this application have been shown and described, a person of ordinary skill in the art may understand that many changes, modifications, replacements, and variations can be made to these embodiments without departing from the principles and purposes of this application, and the scope of this application is defined by the claims and their equivalents.

## Claims

1. A rotating shaft (10) of an excitation motor, an interior of the rotating shaft (10) being configured with a wiring channel (100), the wiring channel (100) having a first threading port (101) and a second threading port (102), the first threading port (101) and the second threading port (102) separately running through an outer surface of the rotating shaft (10), and the wiring channel (100) being configured to accommodate a wire (50) connecting an excitation unit (200) and a rotor excitation winding (401).

2. The rotating shaft (10) of the excitation motor according to claim 1, wherein both the first threading port (101) and the second threading port (102) run through an outer peripheral surface of the rotating shaft (10).

3. The rotating shaft (10) of the excitation motor according to claim 1 or 2, wherein the first threading port (101) and the second threading port (102) are disposed at intervals along an axial direction of the rotating shaft (10).

4. The rotating shaft (10) of the excitation motor according to any one of claims 1 to 3, wherein the wiring channel (100) comprises:
an axial segment (110), wherein the axial segment (110) extends along the axial direction of the rotating shaft (10);
a first radial segment (120), wherein the first radial segment (120) extends along a radial direction of the rotating shaft (10), one end of the first radial segment (120) is in communication with one end of the axial segment (110), and the other end of the first radial segment (120) forms the first threading port (101); and
a second radial segment (130), wherein the second radial segment (130) extends along the radial direction of the rotating shaft (10), one end of the second radial segment (130) is in communication with the other end of the axial segment (110), and the other end of the second radial segment (130) forms the second threading port (102).

5. The rotating shaft (10) of the excitation motor according to claim 4, wherein the first radial segment (120) and the second radial segment (130) extend along the radial direction of the rotating shaft (10) toward a same side of the axial segment (110).

6. The rotating shaft (10) of the excitation motor according to claim 4 or 5, wherein a length of the first radial segment (120) is equal to a length of the second radial segment (130).

7. The rotating shaft (10) of the excitation motor according to any one of claims 4 to 6, wherein the rotating shaft (10) is configured with a process hole (140), the process hole (140) extends along the axial direction of the rotating shaft (10) and runs through at least one end of the rotating shaft (10), and the axial segment (110) is constituted by a portion of the process hole (140).

8. The rotating shaft (10) of the excitation motor according to claim 7, wherein a portion of the process hole (140) other than the portion constituting the axial segment (110) is filled with a sealing member (20).

9. The rotating shaft (10) of the excitation motor according to claim 8, wherein the sealing member (20) is an insulating member.

10. The rotating shaft (10) of the excitation motor according to any one of claims 7 to 9, wherein a central axis of the process hole (140) coincides with a central axis of the rotating shaft (10).

11. The rotating shaft (10) of the excitation motor according to any one of claims 1 to 10, wherein a plurality of wiring channels (100) are configured and arranged at intervals along a circumferential direction of the rotating shaft (10).

12. The rotating shaft (10) of the excitation motor according to any one of claims 1 to 11, wherein two wiring channels (100) are configured and disposed opposite to each other along the radial direction of the rotating shaft (10).

13. A rotor (1) of an excitation motor, comprising:
the rotating shaft (10) of the excitation motor according to any one of claims 1 to 12;
an excitation unit (200);
a rotor core (40), the rotating shaft (10) being connected to the rotor core (40), and the rotor core (40) being provided with a rotor excitation winding (401); and
a wire (50), the wire (50) passing through the wiring channel (100) through the first threading port (101) and the second threading port (102), and the wire (50) being separately connected to the excitation unit (200) and the excitation winding.

14. The rotor (1) of the excitation motor according to claim 13, wherein the excitation unit (200) comprises:
an excitation stator (210); and
an excitation rotor (220), wherein the excitation rotor (220) is sleeved on the rotating shaft (10) and rotates synchronously with the rotating shaft (10), and the excitation rotor (220) is connected to the wire (50).

15. The rotor (1) of the excitation motor according to claim 13 or 14, wherein the rotor core (40) covers the first threading port (101), and one end of the wire (50) is connected to the rotor excitation winding (401) through the first threading port (101); and
the excitation unit (200) covers the second threading port (102), and the other end of the wire (50) is connected to the excitation unit (200) through the second threading port (102).

16. The rotor (1) of the excitation motor according to any one of claims 13 to 15, further comprising:
a first plug (310), the first plug (310) blocking the first threading port (101), and the first plug (310) being provided with a first positioning hole (311) through which the wire (50) passes; and
a second plug (320), the second plug (320) blocking the second threading port (102), and the second plug (320) being provided with a second positioning hole (321) through which the wire (50) passes.

17. The rotor (1) of the excitation motor according to claim 16, wherein each of the first plug (310) and the second plug (320) comprises:
an insertion segment (330); and
a positioning segment (340), wherein the positioning segment (340) is connected to one end of the insertion segment (330), a cross-sectional area of the positioning segment (340) is greater than a cross-sectional area of the insertion segment (330), the first threading port (101) and the second threading port (102) are each provided with a sinking groove (150), and the positioning segment (340) stops against a bottom wall of the sinking groove (150).

18. The rotor (1) of the excitation motor according to claim 17, wherein the other end of the insertion segment (330) is provided with a guide portion (350), and a cross-sectional area of the guide portion (350) gradually decreases along a direction away from the positioning segment (340).

19. The rotor (1) of the excitation motor according to claim 18, wherein an outer peripheral surface of the insertion segment (330) is provided with a deformation groove (360) extending along a circumferential direction of the insertion segment (330), and the deformation groove (360) is adjacent to the guide portion (350) and is disposed on a side of the guide portion (350) facing the positioning segment (340).

20. The rotor (1) of the excitation motor according to any one of claims 13 to 19, further comprising:
a first jointing clamp (410), the first jointing clamp (410) separately clamping the rotor excitation winding (401) and the wire (50), so that the rotor excitation winding (401) and the wire (50) are connected through the first jointing clamp (410); and
a second jointing clamp (420), the second jointing clamp (420) separately clamping the excitation unit (200) and the wire (50), so that the excitation unit (200) and the wire (50) are connected through the second jointing clamp (420).

21. The rotor (1) of the excitation motor according to claim 20, wherein each of the first jointing clamp (410) and the second jointing clamp (420) comprises:
a substrate (430);
a first clamping jaw (440); and
a second clamping jaw (450), wherein the first clamping jaw (440) and the second clamping jaw (450) are respectively disposed on two opposite sides of the substrate (430), the first clamping jaw (440) is configured to clamp the rotor excitation winding (401) or the excitation unit (200), and the second clamping jaw (450) is configured to clamp the wire (50).

22. The rotor (1) of the excitation motor according to claim 21, wherein each of the first clamping jaw (440) and the second clamping jaw (450) comprises:
a first elastic arm (460); and
a second elastic arm (470), wherein a clamping hole (480) and an inlet/outlet notch (490) that are in communication with each other are defined between the first elastic arm (460) and the second elastic arm (470), and a width of the inlet/outlet notch (490) is less than an aperture of the clamping hole (480).

23. The rotor (1) of the excitation motor according to claim 22, wherein a central axis of the clamping hole (480) of the first clamping jaw (440) is perpendicular to a central axis of the clamping hole (480) of the second clamping jaw (450).

24. An excitation motor (1000), comprising the rotor (1) of the excitation motor according to any one of claims 13 to 23.

25. A vehicle (2000), comprising the excitation motor (1000) according to claim 24.
